Europäisches Patentamt

(19) European Patent Office

Office européen des brevets

(11) Veröffentlichungsnummer: **0 006 104**
**A1**

## EUROPÄISCHE PATENTANMELDUNG

(21) Anmeldenummer: **79100071.4**

(22) Anmeldetag: **11.01.79**

(51) Int. Cl.³: **A 01 B 45/02, F 16 H 3/18**

(30) Priorität: **12.06.78 DE 7817532 U**

(43) Veröffentlichungstag der Anmeldung: **09.01.80**
Patentblatt **80/1**

(84) Benannte Vertragsstaaten: **BE CH FR GB NL SE**

(71) Anmelder: **GUTBROD-WERKE GMBH, D-6601 Bübingen (Saar) (DE)**

(72) Erfinder: **Klever, Manfred, Dipl. Ing., Rotenbühler Weg 40b, D-6600 Saarbrücken (DE)**
Erfinder: **Rott, Karl-Heinz, Ing. grad., Waldstrasse 77, D-6601 Bübingen (Saar) (DE)**

(54) **Holmgeführte Vorrichtung zur Bodenbearbeitung, insbesondere zum Vertikutieren von Rasenflächen mittels eines verfahrbaren Arbeitsgerätes.**

(57) Gemäß der Erfindung wird die Wirkungsweise von Vertikutiergeräten, deren umlaufende Werkzeugwelle (24) mehrere Vertikutierwerkzeuge trägt dadurch verbessert, daß die Drehrichtung der Werkzeugwelle durch Betätigung eines Stellorganes (10) wahlweise änderbar ist. Das geschieht bei elektromotorisch angetriebener Werkzeugwelle durch Anwendung eines polumschaltbaren Motors und beim Antrieb der Werkzeugwelle mittels Verbrennungsmotor durch ein Zusatzgetriebe, welches die Drehrichtung der Werkzeugwelle wahlweise umkehrt.

ACTORUM AG

EP 0 006 104 A1

## Beschreibung

Die Erfindung bezieht sich auf eine für die Rasenpflege bestimmte holmgeführte Vorrichtung zur Bodenbearbeitung, insbesondere zum Vertikutieren von Rasenflächen mittels eines verfahrbaren Arbeitsgerätes, dessen rotierende Werkzeugtragwelle mehrere zwischen Klemmstücken fixierte Schneidwerkzeuge aufweist.

Beim Einsatz von Vertikutiergeräten entsteht immer wieder der Wunsch, die Rotationsrichtung der die Schneidwerkzeuge tragenden Welle zu ändern, was mit der Bodenbeschaffenheit, dem Grad der Verunkrautung, dem Wachstumsstand des zu bearbeitenden Rasens u. a. stets wechselnden Vorbedingungen zusammenhängt. Es lassen sich deshalb keine allgemein gültigen Regeln aufstellen, nach welchen sich der Bedienungsmann richten und feststellen kann, in welchen Fällen und bei welchen Gegebenheiten die Werkzeugtragwelle besser gleichsinnig mit den Laufrädern rotiert und wann bessere Arbeitsergebnisse mit einer umgekehrt drehenden Werkzeugtragwelle erzielt werden. Hinzu kommt noch, daß Vertikutiergeräte immer häufiger zur vorbereitenden Bearbeitung solcher Rasenflächen eingesetzt werden, bei denen der Wachstumsstand durch Nachsäen verdichtet werden soll. In solchen Fällen sind nämlich die Kahlstellen der Rasenfläche leicht aufzurauhen, wozu ein marktgängiges Vertikutiergerät mit wahlweise umkehrbarer Drehrichtung der die den Erdboden ritzenden Schneidmesser tragenden Welle gut geeignet sein würde.

Ausgehend von Überlegungen der vorbeschriebenen Art sind
die der Erfindung zugrundeliegende Aufgabe und zugleich
ihre Lösung darin zu erblicken, ein einfaches leichtes
und wenig aufwendiges Vertikutiergerät mit wahlweise
umkehrbarer Drehrichtung der Werkzeugtragwelle zu schaffen.

Die einfachste, aber auch unbequemste Art, ein Vertikutiergerät in der gewünschten Weise umzurüsten, besteht darin,
den Führungsholm vom hinteren Bereich des Gerätes nach vorn
oder umgekehrt umzumontieren. Gemäß der Erfindung wird vorgeschlagen, Einsteckführungen o. dgl. für die Holmenden vorzugsweise vorn und hinten am Gerätegehäuse anzuordnen.

Weniger zeitraubend und bequemer ist es, wenn, wie weiterhin
gemäß der Erfindung vorgeschlagen wird, der Führungsholm zu
beiden Seiten etwa in der Mitte der Längserstreckung des Gerätegehäuses an demselben schwenk- und in den zwei Endstellungen vorn und hinten, d. h. für Vorwärts- und Rückwärtsfahrt
feststellbar gelagert ist. Diese Bauweise ist in der weiter
unten beschriebenen Zeichnung nicht dargestellt und ist nur
in solchen Fällen realisierbar, wo der Gehäuseaufbau schmal
genug ist, damit die Holmstangen seitlich daran vorbeigeführt werden können, ohne seitlich überzustehen, wodurch die
Verwendbarkeit des Gerätes an Engstellen oder z. B. neben
Bäumen und Mauern eingeschränkt werden könnte.

Gegenstand der Erfindung sind aber vor allem holmgeführte
Vorrichtungen zur Bodenbearbeitung, vor allem Vertikutiergeräte, deren Werkzeugtragwelle motorisch angetrieben wird.
Erfindungsgemäß wird vorgeschlagen, hierzu einen polumschaltbaren Elektromotor zu verwenden, wobei als Stellorgan
für die Polumschaltung in der Reichweite des Bedienungsmannes, vorzugsweise auf der Abdeckhaube für den Motor, ein
Schalter angeordnet sein kann. Dieser Polumschalter kann nach
einer weiteren vorteilhaften Einzelheit des Erfindungsgedankens in das Schalter-Steckergehäuse des Elektromotors integriert und als zentrale Ein- und Umschaltstelle am Bedienungsholm angeordnet sein.

Wird die Werkzeugtragwelle mittels eines Verbrennungsmotors
angetrieben, so kann nach der Erfindung ferner mittels eines
Stellgliedes für ein in den Kraftfluß vom Motor zur Werkzeugtragwelle eingeschaltetes Getriebe die Umstellung vorgenommen werden, wobei ein in einer Schwinge gelagertes Ritzel
wahlweise mit einem mit der Werkzeugtragwelle fest verbundenen inneren Zahnkranz oder einem konzentrisch hierzu befindlichen äußeren Zahnkranz, dessen Zähne denen des inneren Zahnkranzes gegenüber stehen, in Eingriff gebracht werden. Diese Ausführungsform des Umkehrgetriebes ist weder bei
der nachfolgenden Beispielsbeschreibung erwähnt noch zeichnerisch dargestellt worden, um den Umfang vorliegender Unterlagen nicht weiter zu vergrößern. Sie liegt jedoch ebenso
im Rahmen des Erfindungsgedankens wie eine andere bevorzugte
Ausführungsform, die gekennzeichnet ist durch eine mindestens
zwei mit ihrer Umfangsfläche aufeinander abrollende Räder,
z. B. miteinander kämmende Zahnräder, tragende Schwinge, die
infolge Rastenführung in mehreren Stellungen zwischen einem
Antriebsritzel und der Werkzeugtragwelle verriegelbar ist. Es
sind nach dem Erfindungsgedanken zwei Einraststellungen vorgesehen, wobei das Drehmoment des Antriebsritzels wahlweise
mittels einer oder mittels zweier Umkehrungen auf die Werkzeugtragwelle übertragen werden kann.

In der Zeichnung ist ein Ausführungsbeispiel der Erfindung
und eine Einzelheit einer anderen Ausführung teils perspektivisch teils schematisch dargestellt.

Es zeigen:

Fig. 1    in perspektivischer Ansicht ein Vertikutiergerät
          nach dem Erfindungsgedanken mit elektromotorischem
          Antrieb der Werkzeugtragwelle;

Fig. 2    ein Stecker-Schaltergehäuse für eine andere Ausfüh-
          rung eines elektrisch betriebenen Vertikutierge-
          rätes;

Fig. 3    als Prinzipskizze die zwei Einstellungen eines Umkehrgetriebes für die Werkzeugtragwelle eines mit
          Verbrennungsmotor betriebenen Vertikutiergerätes.

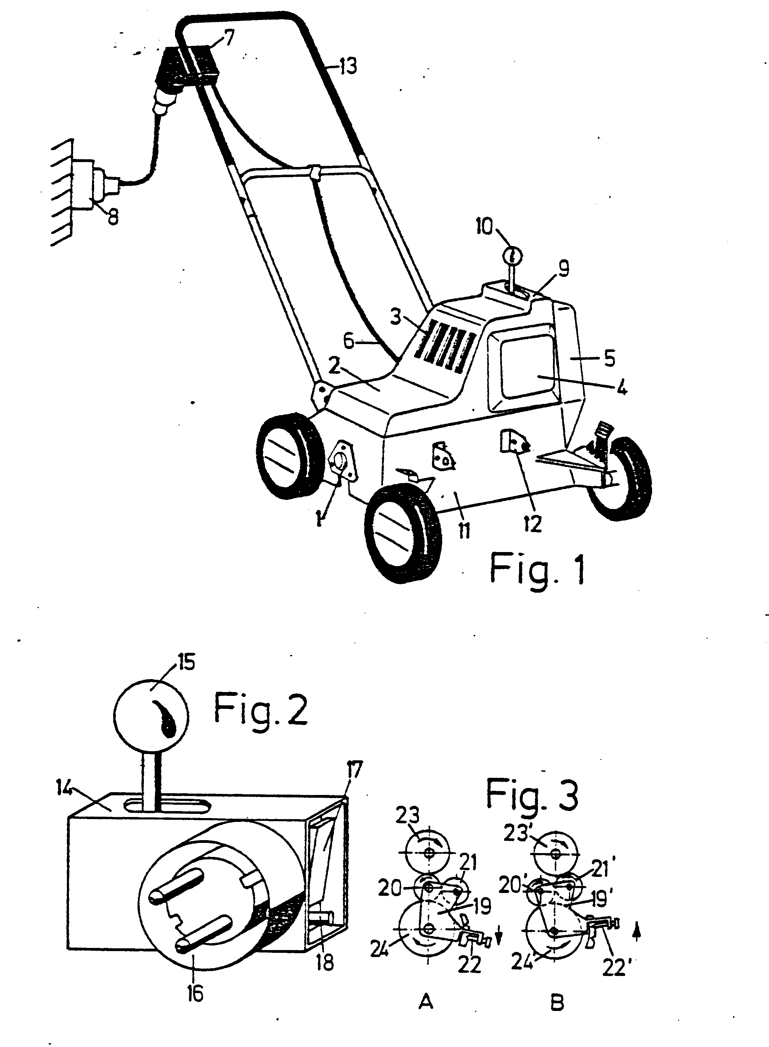

Beim Vertikutiergerät nach Fig. 1 wird die Werkzeugtragwelle 1 elektromotorisch angetrieben. Ein wahlweise in der
einen oder in der anderen Drehrichtung laufender, sog. polumschaltbarer Elektromotor wird mittels einer Haube 2 gegen
Beschädigung und Verschmutzung gesichert. Diese weist
Schlitze 3 für die Kühlluftzirkulation und abnehmbare
Deckel 4, 5 für Reinigung und Montage auf. Über ein Kabel 6
ist der Antriebsmotor mit dem Schalter-Steckergehäuse 7 verbunden, das seinerseits ein von der Steckdose 8 herangeführtes Zwischenkabel aufnimmt. Der Polumschalter 9 ist an einer
vom Bedienungsmann mühelos erreichbaren Stelle oben auf der
Haube 2 angebracht. Bei Betätigung des Schalthebels 10 ändert sich die Drehrichtung der Werkzeugtragwelle 1.

Für den Fall der Anwendung eines Elektromotors der nur in einer Drehrichtung umläuft, sind am Fahrgestellgehäuse 11 Einsteckführungen 12 an beiden Stirnseiten vorgesehen, die zum Festlegen des Führungsholmes 13 beim Umrüsten des Vertikutiergerätes von Vorwärts- auf Rückwärtsfahrt dienen.

In das Stecker-Schaltergehäuse 14 nach Fig. 2 ist ein Polumschalter 15 integriert, so daß im Falle seiner Verwendung der in Fig. 1 gezeigte Polumschalter 9, 10 wegfällt. Im übrigen zeigt das Schaltergehäuse 14 das übliche Kupplungsteil 16 für ein von der Steckdose herangeführtes Kabel. Außerdem sind seitlich am Gehäuse 14 der Kippschalter 17 und der Sicherheitsausschalter 18 angebracht.

Fig. 3 zeigt ein mechanisches Umkehrgetriebe, das dann verwendet werden kann, wenn die Werkzeugtragwelle von einem Verbrennungsmotor angetrieben wird. Die zwei Skizzen zeigen die Getrieberäder in beiden Schaltstellungen, also beim Vorwärts- und beim Rückwärtslauf der Werkzeugtragwelle.

In einer Schwinge 19 bzw. 19' sind zwei miteinander kämmende Ritzel 20 und 21 bzw. 20' und 21' festgelegt. Mittels eines Rastengesperres 22 bzw. 22' ist die Schwinge 19 bzw. 19' in den beiden dargestellten Stellungen A und B feststellbar. In der Stellung A der Schwinge 19 wird das vom Antriebszahnrad 23 eingeleitete Drehmoment über das Ritzel 20 auf die Werkzeugtragwelle 24 übertragen und das Ritzel 21 läuft leer mit. Anhand der eingetragenen Pfeile ist ersichtlich, daß die Werkzeugtragwelle 24 in der Stellung A gegenüber dem Antriebszahnrad 23 umgekehrt rotiert.

In der Stellung B der Schwinge 19' wird das vom Antriebszahnrad 23'eingeleitete Drehmoment über beide Ritzel 20'
und 21' auf die Werkzeugtragwelle 24' übertragen, und zwar
- wie aus den eingezeichneten Pfeilen ersichtlich ist -
läuft diese dann umgekehrt wie das Antriebszahnrad 23'.
Die Umstellung erfolgt durch Verstellen des Rastengesperres 22 bzw. 22' in den eingezeichneten Pfeilrichtungen.

GUTBROD-WERKE GMBH

Bübingen, 04.01.1979
Industriegelände
Akte 134

0006104

Europäische Patentanmeldung

Holmgeführte Vorrichtung zur Bodenbearbeitung, insbesondere zum Vertikutieren von Rasenflächen mittels eines
verfahrbaren Arbeitsgerätes

Patentansprüche

1) Holmgeführte Vorrichtung zur Bodenbearbeitung, insbesondere zum Vertikutieren von Rasenflächen mittels eines
verfahrbaren Arbeitsgerätes, dessen rotierende Werkzeug-

- 2 -

0006104

tragwelle mehrere zwischen Klemmstücken fixierte Schneidwerkzeuge aufweist, dadurch gekennzeichnet, daß die Drehrichtung der Werkzeugwelle (24) durch Betätigung von Stellorganen (10, 12, 15, 22) umkehrbar ist.

2) Vorrichtung nach Anspruch 1, deren Werkzeugtragwelle motorisch angetrieben wird, gekennzeichnet durch Verwendung eines polumschaltbaren Elektromotors.

3) Vorrichtung nach den Ansprüchen 1 und 2, dadurch gekennzeichnet, daß in Reichweite des Bedienungsmannes, vorzugsweise auf der Abdeckhaube (2) für den Motor, ein Polumschalter (9) angeordnet ist.

4) Vorrichtung nach den Ansprüchen 1 bis 3, dadurch gekennzeichnet, daß der Polumschalter (15) in ein Schalter-Steckergehäuse (14), vorzugsweise am Bedienungsholm (13) des Arbeitsgerätes, integriert ist.

5) Vorrichtung nach Anspruch 1, deren Werkzeugtragwelle mittels eines Verbrennungsmotors angetrieben ist, gekennzeichnet durch ein Stellglied (22) für ein in den Kraftfluß vom Motor zur Werkzeugtragwelle (24) einschaltbares Umkehrgetriebe.

6) Vorrichtung nach den Ansprüchen 1 und 5, gekennzeichnet durch ein schwenkbares Ritzel, das wahlweise mit einem inneren oder einem äußeren Zahnkranz der anzutreibenden Welle in Eingriff schaltbar ist (ohne Zeichnung).

7) Vorrichtung nach den Ansprüchen 1 und 5, gekennzeichnet durch eine mindestens zwei aufeinander abrollende Räder, z. B. miteinander kämmende Zahnräder (20, 21), tragende Schwinge (19), die mittels Rastenführung (22) in mehreren Stellungen (A und B) zwischen einem Antriebszahnrad (23) und der Werkzeugtragwelle (24) verriegelbar ist.

8) Vorrichtung nach Anspruch 7, gekennzeichnet durch zwei Einraststellungen (A u. B) der Schwinge (22), wobei das Drehmoment des Antriebszahnrades (23) wahlweise mittels einer oder mittels zweier Umkehrungen auf die Werkzeugtragwelle (24) übertragbar ist.

9) Vorrichtung nach Anspruch 1, dadurch gekennzeichnet, daß der Führungsholm (13) an beiden Seiten etwa in der Mitte der Längserstreckung des Gehäuses (11) an demselben schwenk- und in den zwei Endstellungen, d. h. für Vorwärts- und Rückwärtsfahrt, feststellbar gelagert ist (ohne Zeichnung).

10) Vorrichtung nach Anspruch 1, dadurch gekennzeichnet, daß in den Bereichen des vorderen und des hinteren Endes des Vertikutiergerätes, vorzugsweise am Gehäuse (11), Einsteckführungen (12) o. dgl. für die Enden des in zwei unterschiedlichen Lagen zum Arbeiten mit umgekehrt laufender Werkzeugtragwelle (24) verriegelbaren Holmes (13) vorgesehen sind.

Fig. 1

Fig. 2

Fig. 3

A    B

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | GB - A - 1 231 798 (SISIS EQUIPMENT LIMITED) <br><br> * Seite 1, Zeilen 51-94; Seite 2, Zeilen 1-44; Figur 1 * <br><br> -- | 1,9 |
| | US - A - 3 481 123 (LESSIG) <br><br> * Spalte 1, Zeilen 23-26; Spalte 3, Zeilen 21-75; Spalte 4, Zeilen 1-75; Spalte 5, Zeilen 1-45; Figuren 1-6 * <br><br> -- | 9 |
| | US - A - 3 764 156 (NEPPER) <br><br> * Spalte 3, Zeilen 16-41; Spalte 5, Zeilen 33-50; Figuren 1,3,8 * <br><br> -- | 9,10 |
| | BE - A - 858 050 (GUTBROD-WERKE) <br><br> * Seite 4, Zeilen 2-14; Seite 5, Zeilen 1-9; Figur 1 * <br><br> -- | 1 |
| | FR - A - 579 418 (ANSAR) <br><br> * Seite 1, Zeilen 22-55; Figur 1 * <br><br> -- | 5,7,8 |
| | GB - A - 1 041 190 (MASCHINEN-FABRIK AUGSBURG-NÜRNBERG AG) <br><br> * Seite 2, Zeilen 3-49; Figuren 1,2 * <br><br> -- | 5,7 |
| A | US - A - 2 417 613 (RADABAUGH) <br><br> * Spalte 3, Zeilen 55-75; Spalte | 1,2 |

./.

### KLASSIFIKATION DER ANMELDUNG (Int.Cl.²)

A 01 B 45/02
F 16 H 3/18

### RECHERCHIERTE SACHGEBIETE (Int. Cl.²)

A 01 B
A 01 D
F 16 H

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-09-1979 | VERDOODT |

EPA form 1503.1 06.78

Europäisches
Patentamt

**EUROPÄISCHER TEILRECHERCHENBERICHT**

0006104

Nummer der Anmeldung

EP 79 10 0071

-2-

| | **EINSCHLÄGIGE DOKUMENTE** | | | KLASSIFIKATION DER ANMELDUNG (Int.Cl.²) |
|---|---|---|---|---|
| Kategorie | Kennzeichnung des Dokuments mit Angabe, soweit erforderlich, der maßgeblichen Teile | betrifft Anspruch | | |
| | 4, Zeilen 1-29; Figuren 1,2,5 *<br><br>-- | | | |
| A | US - A - 2 353 345 (LINDSKOG)<br>* Seite 2, linke Spalte, Zeilen 31-40; Figuren 1-3 *<br><br>---- | 1 | | |
| | | | | **RECHERCHIERTE SACHGEBIETE (Int.Cl.²)** |

EPA Form 1505.3  06.78